# DEMANDE DE BREVET EUROPEEN

(11) **EP 1 479 287 A1**
(43) Date de publication de la demande: **24.11.2004**
(21) Numéro de dépôt: 04102031.4
(22) Date de dépôt: 11.05.2004
(51) Int. Cl.: A01G 11/00

(54) **Dispositif de sterilisation des sols**

(30) Priorité: 13.05.2003 FR 0350152
(71) Demandeur: VERDIANI, Michel, 06700 SAINT LAURENT DU VAR (FR); DI FABRIZIO, Fabio, 18014 OSPIDALETTI (IT)
(72) Inventeur: VERDIANI, Michel, 06700 SAINT LAURENT DU VAR (FR); DI FABRIZIO, Fabio, 18014 OSPIDALETTI (IT)
(74) Mandataire: Hautier, Jean-Louis

(57) **Abrégé**

Dispositif de stérilisation des sols comportant un châssis (1) destiné à être déplacé sur le sol (2) à traiter, ce châssis (1) portant sur sa face adjacente au sol (2) des dents (4) destinées à pénétrer dans le sol, caractérisé en ce qu'il comprend un générateur de vapeur d'eau sous pression, extérieur au châssis (1) qui est relié par des conduites souples, reliées à chacune des dents (4) pour injecter de la vapeur d'eau dans celles-ci et dans le sol (2).

## Description

La présente invention concerne un dispositif de stérilisation des sols.

On sait que les organismes pathogéniques tels que les nématodes, les vers, moisissures et pathogènes bactériens contenus dans le sol causent des dommages économiques considérables aux récoltes qui sont cultivées dans de tels sols infestés.

Pour désinfecter les sols, les agriculteurs utilisent couramment des pesticides chimiques, des produits phytosanitaires ou du bromure de méthyle.

Cependant de tels produits sont nocifs et doivent être utilisés avec précaution. De plus ces produits polluent l'environnement et les nappes phréatiques à tel point qu'il est envisagé d'interdire leur emploi.

Pour remédier aux inconvénients des produits ci-dessus, il a été proposé dans le brevet américain 5,259,327 un dispositif permettant d'injecter de l'eau chaude dans le sol.

Ce dispositif comporte à cet effet un châssis destiné à être déplacé sur le sol. Ce châssis porte sur sa face adjacente au sol des dents destinées à pénétrer dans le sol et raccordées à un circuit d'eau chaude pour injecter celle-ci dans le sol.

Cependant, ce dispositif n'est pas suffisamment efficace, car l'eau chaude ne pénètre pas à une profondeur suffisante dans le sol et se refroidit très rapidement au contact du sol.

FR-A-2.383.601 montre un dispositif sans collecteur, avec un générateur embarqué ce qui limite fortement la taille et la puissance du générateur utilisable. Le poids de l'ensemble s'enfonce grandement dans le sol ce qui rend plus difficile son déplacement.

Le but de la présente invention est de proposer un dispositif qui permet de stériliser efficacement les sols tout en étant non polluant vis-à-vis des utilisateurs et de l'environnement.

Suivant l'invention, le dispositif de stérilisation des sols comportant un châssis destiné à être déplacé sur le sol à traiter, ce châssis portant sur sa face adjacente au sol des dents destinées à pénétrer dans le sol, est caractérisé en ce qu'il comprend un générateur de vapeur d'eau sous pression, extérieur au châssis et en ce que le châssis porte un collecteur de vapeur qui est relié au générateur de vapeur extérieur, ce collecteur étant lui-même relié par des tuyaux aux dents d'éjection de vapeur d'eau pour injecter de la vapeur d'eau dans celles-ci et dans le sol.

Le générateur n'étant pas porté par le châssis, son poids n'est pas une contrainte et on peut utiliser des générateurs fort puissants, en combinaison avec un collecteur embarqué sur le châssis apte à distribuer la vapeur aux dents.

Ce dispositif permet grâce aux dents enfoncées dans le sol, d'injecter dans ce dernier de la vapeur d'eau sous pression portée à une température au moins égale à 100° C qui pénètre profondément dans le sol. Cette vapeur d'eau stérilise efficacement le sol, sans polluer l'environnement.

De préférence, le châssis porte plusieurs rangées de dents s'étendant transversalement à ce châssis par rapport à sa direction de déplacement.

De préférence également, les dents sont décalées d'une rangée à l'autre.

Cette disposition permet d'augmenter l'efficacité du dispositif.

Selon une version avantageuse, chaque dent est fixée au châssis au moyen d'une lame formant ressort pouvant fléchir dans une direction opposée à la direction de déplacement du châssis.

Ainsi, les dents peuvent fléchir, sans casser, lorsqu'elles rencontrent un obstacle dans le sol.

De préférence, chaque dent comporte un élément tubulaire comportant plusieurs ouvertures d'éjection de vapeur d'eau réparties suivant la longueur dudit élément, ces ouvertures étant orientées de façon à permettre une éjection de la vapeur d'eau vers l'avant, vers l'arrière et transversalement à la direction de déplacement du châssis.

Ainsi, chaque dent est capable d'injecter de la vapeur d'eau dans toutes les directions et de stériliser un grand volume de sol.

Selon d'autres caractéristiques de l'invention :
- l'élément tubulaire est fixé à l'arrière de la lame formant ressort, relativement au sens de déplacement du châssis et chaque lame comporte sur sa face avant, un élément rigide conformé en couteau dont l'aréte est dirigée vers l'avant pour creuser un sillon lors du déplacement du châssis,
- l'élément tubulaire et l'élément rigide sont fixés de façon amovible à ladite lame formant ressort,
- le châssis porte des roues à son extrémité avant, et un ou plusieurs rouleaux à son extrémité arrière prenant appui sur le sol pour tasser celui-ci,
- les roues avant et les rouleaux arrières sont fixés au châssis d'une manière réglable en hauteur pour régler la profondeur d'enfoncement des dents dans le sol,
- le dessus du châssis est recouvert par un revêtement étanche,
- les faces latérales du châssis portent chacune un panneau rigide s'étendant sur toute la longueur du châssis et dont le bord inférieur est susceptible de s'enfoncer dans le sol.

Les dispositions ci-dessus permettent de limiter les fuites de vapeur vers le haut ou sur les côtés du châssis, permettent à la vapeur de pénétrer à une plus grande profondeur dans le sol et de maintenir celle-ci à une température plus élevée pendant une durée plus longue.

D'autres particularités et avantages de l'invention apparaîtront encore dans la description ci-après.

Aux dessins annexés, donnés à titre d'exemples non limitatifs :
- la figure 1 est une vue en plan du dessus du dispositif selon l'invention,
- la figure 2 est une vue latérale du dispositif et en coupe du sol montrant la pénétration des dents du dispositif dans le sol,
- la figure 3 montre les différents éléments de chaque dent, ceux-ci étant séparés les uns des autres,
- la figure 4 est une vue analogue à la figure 3, les éléments de chaque dent étant assemblés,
- la figure 5 est une vue agrandie du détail A de la figure 3,
- la figure 6 est une vue en plan montrant l'arrière du dispositif selon l'invention,
- la figure 7 est une vue analogue à la figure 6, le dispositif étant en position partiellement replié.

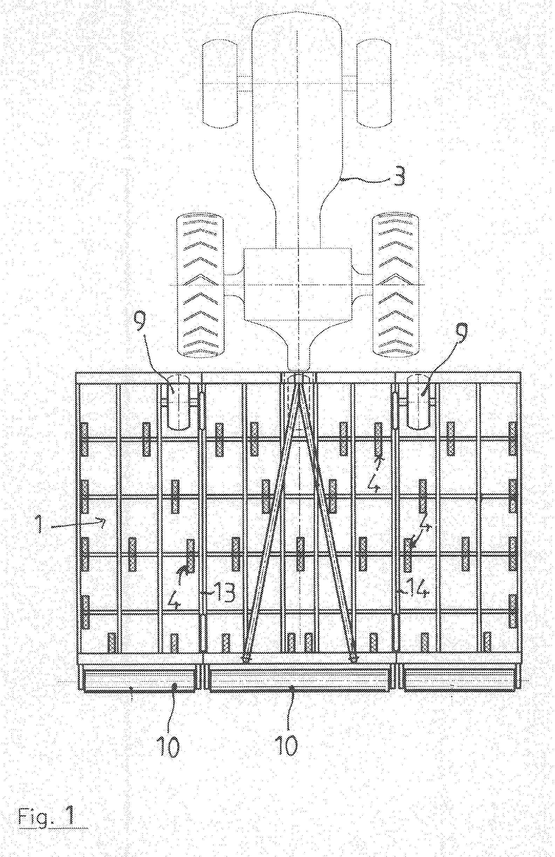

Dans la réalisation représentée sur les figures 1, 2, 6 et 7 le dispositif de stérilisation des sols comporte un châssis 1 destiné à être déplacé sur le sol 2 à traiter au moyen d'un tracteur 3 (voir figure 1).

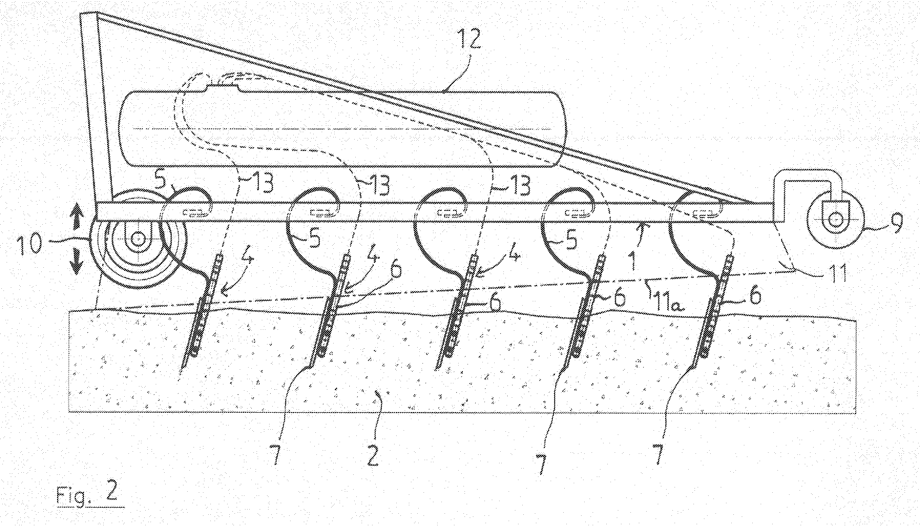

Le châssis 1 porte (voir figure 2) sur sa face adjacente au sol 2 des dents 4 destinées à pénétrer dans le sol.

Le dispositif selon l'invention, comprend un générateur de vapeur d'eau sous pression, extérieur au châssis 1 qui est relié par une conduite souple (non représentée), elle-même reliée à chacune des dents 4 pour injecter de la vapeur d'eau dans celles-ci et dans le sol 2.

Comme montré par les figures 1 et 2, le châssis 1 porte plusieurs rangées de dents 4 s'étendant transversalement à ce châssis par rapport à sa direction de déplacement. Ces dents 4 sont décalées d'une rangée à l'autre (voir figure 1 ).

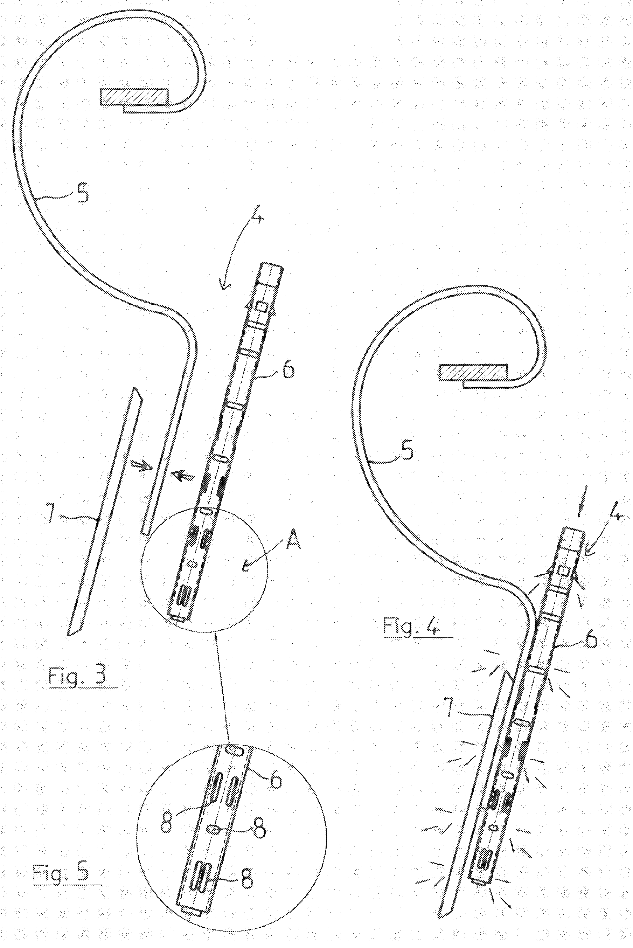

On voit sur les figures 3 et 4 que chaque dent 4 est fixée au châssis 1 au moyen d'une lame formant ressort 5 pouvant fléchir dans une direction opposée à la direction de déplacement du châssis 1. Chaque lame 5 présente une partie ayant sensiblement la forme d'une spirale.

Les figures 3 et 4 montrent d'autre part que chaque dent 4 comporte un élément tubulaire 6 comportant plusieurs ouvertures 8 d'éjection de vapeur d'eau réparties suivant la longueur de l'élément 6. Ces ouvertures 8 sont orientées de façon à permettre une éjection de la vapeur d'eau vers l'avant, vers l'arrière et transversalement à la direction de déplacement du châssis 1.

De plus, les figures 3 et 4 montrent que l'élément tubulaire 6 est fixé à l'arrière de la lame formant ressort 5, relativement au sens de déplacement du châssis 1 et chaque lame 5 comporte sur sa face avant, un élément rigide 7 conformé en couteau dont l'aréte est dirigée vers l'avant pour creuser un sillon lors du déplacement du châssis qui a pour effet d'ameublir la terre et de favoriser la pénétration de la vapeur d'eau dans le sol.

L'élément tubulaire 6 et l'élément rigide 7 sont fixés de façon amovible à la lame formant ressort 5, pour faciliter le remplacement de ces éléments lorsqu'ils sont usés.

Les figures 1, 2, 6 et 7 montrent que le châssis 1 porte des roues 9 à son extrémité avant, et des rouleaux 10 à son extrémité arrière prenant appui sur le sol pour tasser celui-ci.

Ce tassement a pour effet de « piéger » la vapeur d'eau dans le sol immédiatement après injection de celle-ci dans ce sol par les dents 4.

Par ailleurs, les roues avant 9 et les rouleaux arrières 10 sont fixés au châssis 1 d'une manière réglable en hauteur pour régler la profondeur d'enfoncement des dents 4 dans le sol 2.

De préférence, le dessus du châssis 1 est recouvert par un revêtement étanche, tel qu'une bâche.

En outre, les faces latérales du châssis 1 portent chacune (voir figure 2) un panneau rigide 11 s'étendant sur toute la longueur du châssis 1 et dont le bord inférieur est susceptible de s'enfoncer dans le sol 2.

Par ailleurs, l'extrémité avant et l'extrémité arrière du châssis 1 portent chacune une bavette souple s'étendant sur toute la largeur du châssis 1 et dont le bord inférieur prend appui sur le sol.

La bâche, les panneaux latéraux et les bavettes avant et arrière ci-dessus créent ainsi sous le châssis un espace sensiblement fermé qui limite les déperditions de vapeur d'eau vers l'extérieur et favorise par conséquent la pénétration de la vapeur dans le sol.

La figure 2 montre que le châssis 1 porte un collecteur de vapeur 12 qui est relié par une conduite souple au générateur de vapeur extérieur. Ce collecteur 12 est lui-même relié par des tuyaux souples 13 aux dents 4 d'éjection de vapeur d'eau.

Avantageusement, la section du collecteur 12 est circulaire. Cette symétrie de révolution assure une répartition homogène de la vapeur délivrée aux différents tuyaux 13.

Dans un mode de réalisation non illustré, le collecteur 12 est disposé transversalement sur le châssis et sur la partie avant de celui-ci pour appliquer le poids du collecteur à l'avant du dispositif.

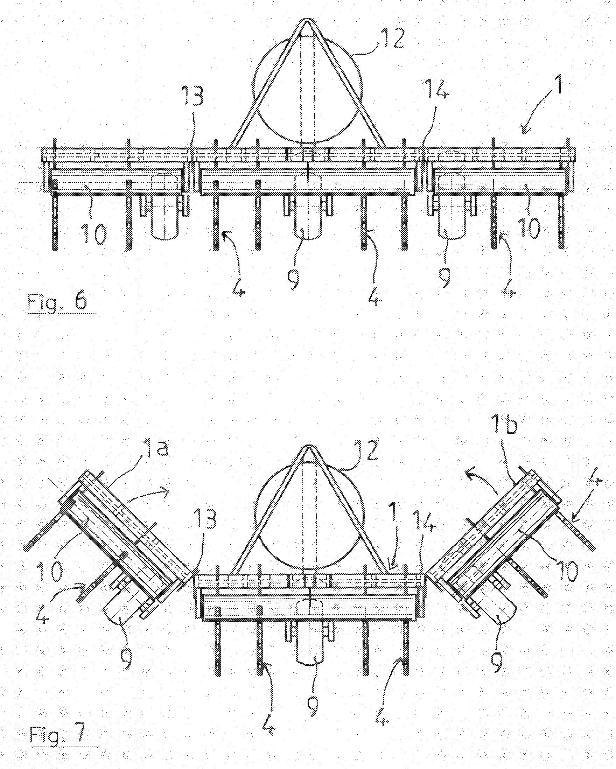

La figure 7 montre que le châssis 1 comporte deux parties latérales 1a, 1 b repliables vers le dessus du châssis 1 suivant deux axes 13, 14 parallèles à la longueur du châssis 1. Ce repliage peut être commandé par des vérins hydrauliques. Cette disposition permet de réduire la largeur du châssis, rendant ainsi possible le déplacement de celui-ci sur la route ou l'entrée dans des serres en verre.

Par ailleurs, la longueur du châssis 1 peut être réglable par coulissement de tubes les uns par rapport aux autres, ce qui permet de modifier la surface traitée par la vapeur d'eau ou éventuellement de réduire l'encombrement du châssis en fonction des nécessités.

Le châssis 1 du dispositif présente à titre d'exemple une surface de l'ordre de 8 m². Ce châssis tiré par un tracteur permet de traiter à la vapeur d'eau entre 100 et 150 m² de sol par heure.

La vapeur d'eau pénètre dans le sol à une température de l'ordre de 100° C.

Les orifices situés sur les dents ont été étudiés de manière à rendre la diffusion des jets de vapeur homogène à tous les niveaux de profondeur, et selon la pression en haut et en bas des dents.

L'injection combinée (profondeur-tout niveau-surface) se révèle particulièrement efficace.

On peut utiliser jusqu'à 60 dents, par exemple.

## Revendications

1. Dispositif de stérilisation des sols comportant un châssis (1) destiné à être déplacé sur le sol (2) à traiter, ce châssis (1) portant sur sa face adjacente au sol (2) des dents (4) destinées à pénétrer dans le sol, **caractérisé en ce qu'**il comprend un générateur de vapeur d'eau sous pression, extérieur au châssis (1) et **en ce que** le châssis (1) porte un collecteur de vapeur (12) qui est relié au générateur de vapeur extérieur, ce collecteur (12) étant lui-même relié par des tuyaux (13) aux dents (4) d'éjection de vapeur d'eau pour injecter de la vapeur d'eau dans celles-ci et dans le sol (2).

2. Dispositif selon la revendication 1, **caractérisé en ce que** chaque dent (4) comporte un élément tubulaire (6) comportant plusieurs ouvertures (8) d'éjection de vapeur d'eau réparties suivant la longueur dudit élément, ces ouvertures (8) étant orientées de façon à permettre une éjection de la vapeur d'eau vers l'avant, vers l'arrière et transversalement à la direction de déplacement du châssis (1).

3. Dispositif selon la revendication 1 ou 2, **caractérisé en ce que** le châssis (1) porte plusieurs rangées de dents (4) s'étendant transversalement à ce châssis par rapport à sa direction de déplacement et **en ce que** les dents (4) sont décalées d'une rangée à l'autre.

4. Dispositif selon l'une des revendications 1 à 3, **caractérisé en ce que** chaque dent (4) est fixée au châssis (1) au moyen d'une lame formant ressort (5) pouvant fléchir dans une direction opposée à la direction de déplacement du châssis.

5. Dispositif selon la revendication 4, **caractérisé en ce que** l'élément tubulaire (6) est fixé à l'arrière de la lame formant ressort (5), relativement au sens de déplacement du châssis (1) et chaque lame (5) comporte sur sa face avant, un élément rigide (7) conformé en couteau dont l'aréte est dirigée vers l'avant pour creuser un sillon lors du déplacement du châssis (1 ).

6. Dispositif selon la revendication 5, **caractérisé en ce que** l'élément tubulaire (6) et l'élément rigide (7) sont fixés de façon amovible à ladite lame formant ressort (5).

7. Dispositif selon l'une quelconque des revendications 1 à 6, **caractérisé par le fait que** le collecteur (12) est relié par une conduite souple au générateur de vapeur extérieur.

8. Dispositif selon l'une des revendications 1 à 7, **caractérisé en ce que** le châssis (1) porte des roues (9) à son extrémité avant, et un ou plusieurs rouleaux (10) à son extrémité arrière prenant appui sur le sol (2) pour tasser celui-ci.

9. Dispositif selon la revendication 8, **caractérisé en ce que** les roues avant (9) et les rouleaux arrières (10) sont fixés au châssis (1) d'une manière réglable en hauteur pour régler la profondeur d'enfoncement des dents (4) dans le sol (2).

10. Dispositif selon l'une des revendications 1 à 9, **caractérisé en ce que** le dessus du châssis (1 ) est recouvert par un revêtement étanche.

11. Dispositif selon l'une des revendications 1 à 10, **caractérisé en ce que** les faces latérales du châssis (1) portent chacune un panneau rigide (11) s'étendant sur toute la longueur du châssis (1) et dont le bord inférieur (11a) est susceptible de s'enfoncer dans le sol (2).

12. Dispositif selon l'une des revendications 1 à 11, **caractérisé en ce que** l'extrémité avant et l'extrémité arrière du châssis (1) portent chacune une bavette souple s'étendant sur toute la largeur du châssis et dont le bord inférieur prend appui sur le sol (2).

13. Dispositif selon l'une quelconque des revendications 1 à 12 **caractérisé en ce que** le collecteur (12) a une section circulaire.

14. Dispositif selon l'une des revendications 1 à 13, **caractérisé en ce que** le châssis (1) comporte deux parties latérales (1a, 1b) repliables vers le dessus du châssis suivant deux axes parallèles (13, 14) à la longueur du châssis.

15. Dispositif selon l'une des revendications 1 à 14, **caractérisé en ce que** la longueur du châssis (1) est réglable par coulissement de tubes les uns par rapport aux autres.
